# FASCICULE DE BREVET EUROPEEN

(11) **EP 3 011 247 B1**
(45) Date de publication et mention de la délivrance du brevet: **29.03.2023**
(21) Numéro de dépôt: 14729935.8
(22) Date de dépôt: 16.06.2014
(51) Int. Cl.: F28D 1/03, F28D 20/02, F28D 1/053, F28D 21/00

(54) **TUBE A RESERVOIR DE MATERIAU A CHANGEMENT DE PHASES, FAISCEAU D'ECHANGE DE CHALEUR ET PROCÉDÉ D'ASSEMBLAGE D'UN ECHANGEUR DE CHALEUR**
ROHR MIT EINEM BEHÄLTER AUS PHASENWECHSELMATERIAL FÜR EIN WÄRMETAUSCHBÜNDEL, INSBESONDERE FÜR EINEN VERDAMPFER EINES KLIMAANLAGENSYSTEMS EINES FAHRZEUGS
TUBE HAVING A CONTAINER OF PHASE CHANGE MATERIAL FOR A HEAT EXCHANGE BUNDLE, IN PARTICULAR FOR AN EVAPORATOR OF AN AIR CONDITIONING SYSTEM OF A VEHICLE

(30) Priorité: 20.06.2013 FR 1355879
(43) Date de publication de la demande: 27.04.2016
(73) Titulaire: Valeo Systemes Thermiques, 78320 Le Mesnil-Saint-Denis (FR)
(72) Inventeur: BELLENFANT, Aurélie, 72210 Roeze Sur Sarthe (FR); ROBILLON, Lionel, 72230 Mulsanne (FR); TOURNEUX, Fabienne, 72000 Le Mans (FR); DOUCET, Philippe, 72300 Sable-sur-Sarthe (FR); PREVOST, Jean-Christophe, 72270 Ligron (FR)
(74) Mandataire: Valeo Systèmes Thermiques
(86) Numéro de dépôt international: PCT/EP2014/062552
(87) Numéro de publication internationale: WO 2014/202523

(56) Documents cités:
- EP-A2- 1 424 531
- EP-A2- 2 293 001
- DE-A1-102004 052 979
- DE-A1-102006 011 327
- FR-A1- 2 878 614
- JP-A- 2000 205 777
- JP-A- 2001 191 175
- US-A1- 2012 272 679

## Description

La présente invention concerne un tube à réservoir de matériau à changement de phases pour faisceau d'échange de chaleur d'échangeur de chaleur, notamment pour un évaporateur d'un circuit de climatisation d'un véhicule. L'invention concerne également le faisceau et l'échangeur obtenus ainsi qu'un procédé d'assemblage dudit échangeur.

On connaît des échangeurs comprenant un faisceau de tubes parallèles formés de plaques contenant un fluide frigorigène, le faisceau étant traversé par un flux d'air forcé externe, balayant les tubes dont la surface, augmentée par l'ajout de perturbateurs ou intercalaires entre les tubes, optimise l'échange thermique.

Il est connu de pourvoir ces échangeurs de chaleur de réservoirs de matériau à changement de phases associés aux tubes du faisceau servant à la circulation du fluide frigorigène. De tels échangeurs permettent de maintenir le refroidissement d'un habitacle du véhicule pendant une période de temps donnée lorsque le moteur du véhicule est à l'arrêt et n'entraîne plus le compresseur de mise en circulation du fluide frigorigène, notamment pour les véhicules munis d'un système d'arrêt automatique du moteur lors des arrêts courts du véhicule. Dans ces périodes d'arrêt du moteur, le matériau à changement de phases restitue en effet des frigories à l'air traversant l'échangeur.

On connait en particulier un évaporateur pour circuit de climatisation de véhicule, comprenant un faisceau d'échange de chaleur pourvu d'un ensemble de tubes de circulation du fluide frigorigène, un réservoir de stockage de matériau à changement de phases étant accolé aux tubes et un passage d'air étant prévu entre les tubes et les réservoirs de stockage de froid, notamment par des profusions et récessions formées entre ces derniers. Dans ces échangeurs le transfert thermique de froid entre les tubes de fluide frigorigène et les réservoirs de matériau à changement de phases est réduit d'une part, par l'existence des dites protusions et récessions s'étendant sur une surface importante de chacun des tubes et d'autres part, par l'épaisseur de matière impliquée dans le transfert thermique du tube au réservoir. En effet, celle-ci comprend la paroi du tube et la paroi du réservoir.

Le document FR 2 878 614 propose une construction complexe des plaques pour accueillir à la fois le matériau à changement de phases et le fluide frigorigène.

La présente invention a pour but de remédier en tout ou partie à ces inconvénients.

A cet effet, il est proposé selon l'invention un tube à réservoir de matériau à changement de phases pour un faisceau d'échange de chaleur d'un échangeur de chaleur, notamment un évaporateur d'un circuit de climatisation d'un habitacle d'un véhicule.

Selon l'invention, ledit tube comprend une première plaque configurée pour former une première face externe du tube, une deuxième plaque configurée pour être assemblée de façon étanche à ladite première plaque et former une seconde face externe, opposée à ladite première face externe, et une plaque intermédiaire configurée pour être assemblée de façon étanche aux dites première et deuxième plaques, entre ces dernières, et délimiter de part et d'autre d'elle même au moins un canal pour la circulation dudit fluide frigorigène dans ledit faisceau et au moins un logement pour ledit matériau à changement de phases, de telle sorte que l'ensemble du matériau à changement de phases est réparti d'un côté de la plaque intermédiaire tandis que le fluide frigorigène est réparti de l'autre côté de la plaque intermédiaire.

Ainsi le fluide frigorigène est en contact avec le matériau à changement de phases par ladite plaque intermédiaire et le transfert thermique du froid est réalisé à travers la paroi de cette dernière. Aucun volume d'air isolant thermique ne réduit ledit transfert thermique comme dans l'échangeur précité. De plus, il ne se trouve qu'une seule épaisseur de paroi pour assurer ce transfert, celle de la plaque intermédiaire dont l'épaisseur pourra avantageusement être réduite relativement à celle d'une plaque externe étant donné qu'elle n'est pas exposée à des chocs ou agressions externes. En outre, la répartition de l'ensemble du matériau à changement de phases d'un côté de la plaque intermédiaire et du matériau frigorigène de l'autre côté de la plaque intermédiaire permet de disposer d'un tube fiable et robuste.

Selon l'invention ladite deuxième plaque est pourvue d'une surface externe configurée pour être en contact avec un flux d'air externe traversant ledit faisceau, notamment pour permettre un échange thermique entre le matériau à changement de phases et ledit flux d'air, et - ladite surface externe est pourvue d'alvéoles, configurées pour augmenter la surface de transfert thermique.

Selon d'autres caractéristiques de l'invention qui pourront être prises seules ou en combinaison :
- lesdites alvéoles comportent chacune un sommet tronconique, ce qui favorise l'écoulement dudit flux d'air sur la surface et diminue les pertes de charge sur le flux d'air,
- lesdites alvéoles sont identiques l'une à l'autre,
- lesdites alvéoles sont adjacentes l'une à l'autre,
- lesdites alvéoles sont disposées en quinconce l'une par rapport à l'autre,
- ladite plaque intermédiaire est dans un matériau identique à celui des première et deuxième plaques,
- ladite plaque intermédiaire est dans un matériau à pouvoir de transfert thermique supérieur à celui des première et deuxième plaques,
- ladite plaque intermédiaire est pourvue de nervures de rigidité, ce qui permet de réduire encore l'épaisseur de sa paroi,
- ladite plaque intermédiaire est pourvue d'au moins une nervure de liaison apte à être assemblée avec ladite première plaque, prévue pour définir le ou lesdits canaux pour le fluide frigorigène,
- ladite première plaque est configurée pour recevoir un intercalaire de transfert thermique avec ledit flux d'air, sur la première face externe du tube,
- ladite première plaque a un format correspondant à une plaque de tube standard du faisceau, à savoir ne comportant pas de réservoir de matériau à changement de phases,
- lesdites première et deuxième plaques et/ou ladite plaque intermédiaire sont configurées pour être jointes l'une à l'autre à leur pourtour,
- ladite première plaque et/ou ladite seconde plaque sont configurées pour permettre un pré assemblage desdites première et deuxième plaques et/ou de ladite plaque intermédiaire, par exemple par des pattes périphériques de la première plaque rabattables sur le bord de la deuxième plaque,
- ledit tube à réservoir de matériau à changement de phases est configuré pour être assemblé à un deuxième tube identique, notamment en positionnant leurs surfaces externes alvéolées sensiblement en vis-à-vis,
- ladite deuxième plaque est configurée pour être jointe à une deuxième plaque dudit deuxième tube, en position en vis-à-vis, les alvéoles de chacune desdites deuxièmes plaques étant jointes l'une à l'autre par leur sommet,
- ledit tube à réservoir de matériau à changement de phases est configuré pour que, lorsqu'il est assemblé audit deuxième tube, dans ladite position en vis-à-vis, ledit assemblage de tubes soit échangeable avec un assemblage d'un tube standard dudit faisceau et d'un intercalaire standard dudit faisceau, à savoir un intercalaire compris entre deux tubes standards dudit faisceau.

L'invention concerne également un faisceau d'échange de chaleur pour un échangeur de chaleur, notamment un évaporateur d'un circuit de climatisation d'un véhicule automobile, comprenant au moins un tube à réservoir de matériau à changement de phases, tel que décrit ci-dessus.

Ledit faisceau est avantageusement configuré pour comporter une pluralité desdits tubes à réservoir de matériau à changement de phases, le nombre de ceux-ci parmi les tubes standards étant adapté au besoin de production de froid dans ledit habitacle du véhicule.

Ledit faisceau comprend avantageusement au moins un dit assemblage de deux dits tubes à réservoir de matériau à changement de phases, en position en vis-à-vis.

L'invention concerne également un échangeur de chaleur, notamment un évaporateur d'un circuit de climatisation d'un véhicule automobile, comprenant au moins un faisceau d'échange de chaleur tel que décrit ci-dessus.

L'invention concerne aussi un procédé d'assemblage d'un échangeur de chaleur comprenant les étapes consistant à réaliser au moins un pré assemblage de deux tubes à réservoir de matériau à changement de phases, en position en vis-à-vis, et disposer ledit pré assemblage entre deux tubes standards dudit faisceau pour permettre un pré assemblage de l'échangeur avant son assemblage.

D'autres caractéristiques et avantages de l'invention apparaîtront à la lecture de la description qui suit d'exemples de réalisation donnés à titre illustratif en référence aux figures annexées. Sur ces figures :
- la figure 1 est une vue en perspective d'un échangeur de chaleur selon un mode de réalisation de l'invention;
- la figure 2 est une vue éclatée d'une partie de l'échangeur de la figure 1;
- la figure 3 est une vue éclatée, agrandie et partielle, montrant un tube à réservoir de matériau à changement de phases de l'échangeur de la figure 1 ;
- la figures 4 est une vue en perspective partielle montrant la face externe du tube de la figure 3; et
- la figure 5 est une vue en coupe transversale d'un assemblage de deux tubes à réservoir de matériau à changement de phases, en position en vis-à-vis, disposé entre deux tubes standards du faisceau de l'échangeur de la figure 1.

Il faut noter que les figures exposent l'invention de manière détaillée et qu'elles peuvent, bien entendu, servir à mieux définir l'invention le cas échéant.

Enfin, des références numériques identiques sont utilisées pour désigner des éléments identiques ou analogues.

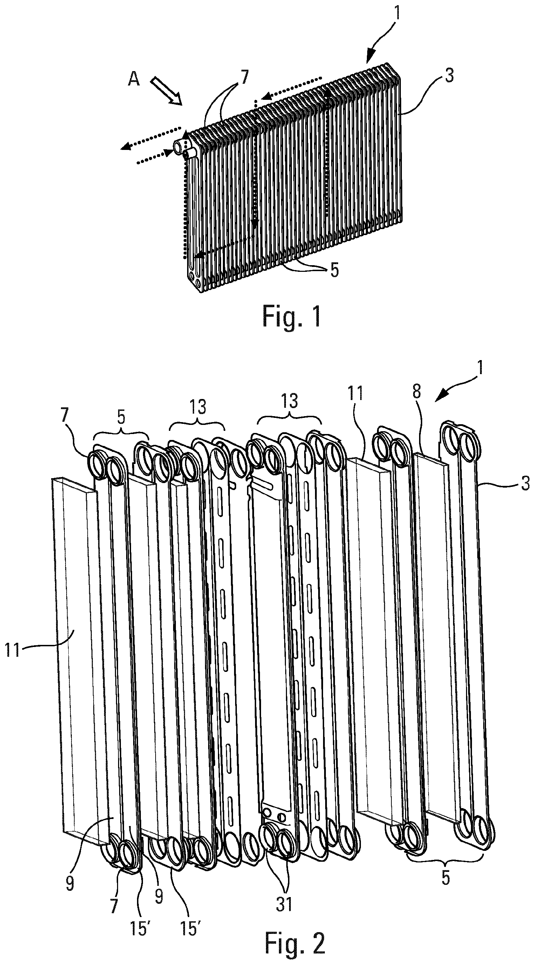

Comme illustré aux figures 1 et 2, l'invention concerne un échangeur de chaleur 1 qui peut être, par exemple, un évaporateur d'une boucle de climatisation d'un habitacle de véhicule automobile.

Structurellement, l'échangeur 1 comprend, de façon connue, un faisceau 3 de tubes parallèles 5, reliés l'un à l'autre, par exemple, par leurs extrémités. Lesdits tubes 5 permettent ici une circulation du fluide frigorigène F dans deux canaux parallèles 9 du tube 5, respectivement dans un premier canal 9 selon un premier sens de circulation du fluide dans le tube et dans un deuxième canal 9, selon une circulation dans le sens opposé. En particulier, les tubes 5 dans lesquels circule le fluide F ont une section transversale oblongue et entre ceux-ci sont agencés des intercalaires 11 augmentant la surface d'échange thermique entre le fluide F circulant dans l'échangeur 1 et un flux d'air extérieur A traversant celui-ci.

Lesdits tubes 5 sont ici formés d'une première plaque 15' et d'une seconde plaque 15'. Lesdites plaques comprennent, par exemple, un fond et un bord périphérique relevé définissant, après assemblage desdites plaques, un volume intérieur de circulation du fluide frigorigène. L'une et/ou l'autre desdites plaques comprennent ici en outre une nervure longitudinale séparant chacun des canaux 9.

Ledit échangeur comprend avantageusement des collecteurs du fluide frigorigène permettant d'introduire et/ou d'extraire le fluide frigorigène desdits tubes 5, par exemple, depuis et/ou vers des entrées/sorties du fluide frigorigène dans l'échangeur. Lesdites plaques pourront pour cela comprendre à leur extrémité des collets 7, formés notamment par emboutissage, pour la circulation du fluide frigorigène d'un tube 5 à l'autre. Lesdits collets 7 sont configurés, notamment, pour établir une communication avec les collets des tubes voisins. Ils sont ici situés à chacune des extrémités desdits canaux 9.

L'intérieur des tubes 5 peut aussi inclure des perturbateurs, en particulier un perturbateur ondulé 8, qui définissent des conduits de circulation du fluide frigorigène à l'intérieur du tube.

Des cloisons internes, non représentées, situées dans les collecteurs, pourront être utilisées pour faire circuler le fluide en plusieurs passes successives, selon les flèches en trait interrompu sur la figure 1, dans le faisceau.

Cela étant, le faisceau 3 comprend des tubes standards 5, tels que décrits ci-dessus, et des tubes 13 selon l'invention destinés à définir un réservoir de matériau à changement de phases. Ces derniers sont décrits ci après.

Les tubes 13 à réservoir de matériau à changement de phases permettent, comme mentionné précédemment, de maintenir le refroidissement d'un habitacle du véhicule pendant une période de temps donnée, en particulier lors des arrêts courts du moteur du véhicule, dans laquelle le matériau à changement de phases M restitue des frigories à l'air A traversant l'échangeur.

Chacun desdits tubes 13 comprend une première plaque 15 configurée pour former une première face externe 17 du tube. Chacun desdits tubes comprend également une deuxième plaque 19 configurée pour être assemblée de façon étanche à ladite première plaque 15 et former une seconde face externe 21, opposée à ladite première face externe 17. Il comprend aussi une plaque intermédiaire 23 configurée pour être assemblée de façon étanche aux dites première et deuxième plaques 15, 19, entre ces dernières. Ladite plaque intermédiaire 23 est configurée pour délimiter de part et d'autre d'elle même au moins un canal 9 pour la circulation dudit fluide frigorigène F dans ledit faisceau 3 et au moins un logement 25 pour ledit matériau M à changement de phases.

Ainsi, le fluide frigorigène F est en contact thermique avec le matériau M à changement de phases par ladite plaque intermédiaire 23 et le transfert thermique du froid est réalisé à travers la paroi 27 de cette dernière. En outre, la répartition de l'ensemble du matériau M à changement de phases d'un côté de la plaque intermédiaire 23 et du fluide frigorigène F de l'autre côté de la plaque intermédiaire 23 permet de disposer d'un tube autorisant la réalisation de faisceaux de profondeur limitée.

Le matériau M à changement de phases est par exemple un matériau dit PCM, c'est-à-dire l'acronyme anglais de « Phase Change Material » lequel réalise une restitution du froid accumulé, transmis par le tube 13, ladite restitution étant opérée lors d'un changement de phases. Le matériau M à changement de phases est notamment un matériau biphasique, dont une restitution du froid est réalisée au changement d'une phase à l'autre, au contact du flux d'air A plus chaud, lorsque la circulation du fluide frigorigène est interrompue. Le changement de phases dans l'autre sens est réalisé grâce aux frigories produites par le fluide frigorigène une fois que celui-ci circule à nouveau.

Plus précisément, ladite deuxième plaque 19 est pourvue d'une surface externe 29 configurée pour être en contact avec le flux d'air externe A traversant ledit faisceau, notamment pour permettre un échange thermique entre le matériau M à changement de phases et ledit flux d'air A. Le matériau M à changement de phase refroidit ainsi ledit flux d'air A lors de son changement de phase.

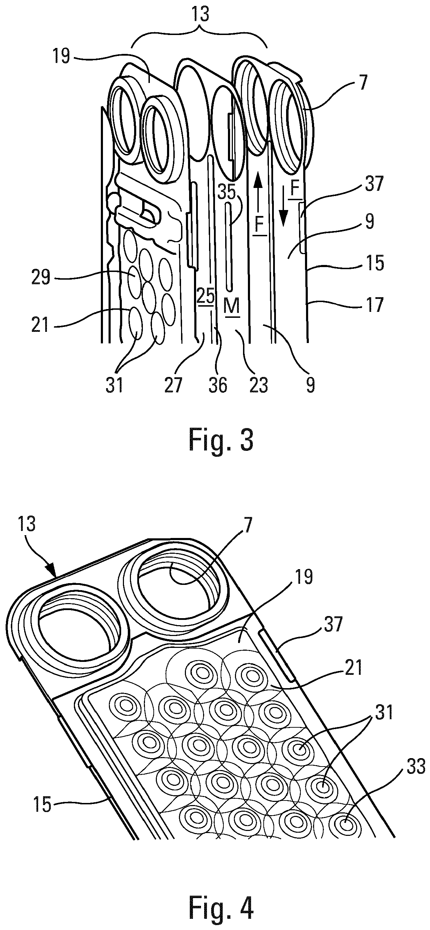

Comme on le voit en particulier aux figures 3 et 4, ladite surface externe 29 pourra être pourvue d'alvéoles 31, configurées pour augmenter la surface de transfert thermique entre le matériau M à changement de phases et ledit flux d'air A.

Lesdites alvéoles 31 comportent chacune, ici, un sommet tronconique 33, ce qui permet l'écoulement dudit flux d'air A sur la surface 29 et diminue les pertes de charge sur le flux d'air. Ces alvéoles 31 sont notamment identiques l'une à l'autre, en particulier adjacentes l'une à l'autre, ce qui augmente la surface en contact avec le flux d'air.

Lesdites alvéoles 31 sont avantageusement disposées en quinconce l'une par rapport à l'autre pour favoriser l'échange thermique avec le flux d'air A.

Ladite plaque intermédiaire 23 est dans un matériau identique à celui des première et deuxième plaques 15, 19, à savoir de l'aluminium et/ou un alliage d'aluminium. En variante, elle pourra être dans un matériau à pouvoir de transfert thermique supérieur à celui des première et deuxième plaques 15, 19, et éventuellement dans un matériau plus rigide.

Ladite plaque intermédiaire 23 est en particulier pourvue de nervures de rigidité 35, ce qui permet de réduire encore l'épaisseur de sa paroi et contenir la différence de pression entre le fluide frigorigène F d'un côté de celle-ci et le matériau M à changement de phases de l'autre côté.

Ladite plaque intermédiaire 23 est également pourvue d'une nervure 36 destinée à la liaison de la plaque intermédiaire 23 avec ladite première plaque 15, en sorte que ces dernières définissent le ou lesdits canaux 9, ici au nombre de deux, pour le fluide frigorigène F.

Ladite première plaque 15 pourra être configurée pour recevoir un intercalaire 11 de transfert thermique avec ledit flux d'air, identique à ceux 11 précités, sur la première face externe 17 du tube. Cette plaque a par exemple un format correspondant à une plaque 15' de tube standard du faisceau, à savoir ne comportant pas de réservoir de matériau à changement de phases. Elle pourra avantageusement être identique à une telle plaque 15' de tube standard.

Lesdites première et deuxième plaques 15, 19 et/ou ladite plaque intermédiaire 23 sont avantageusement configurées pour être jointes l'une à l'autre à leur pourtour, par exemple au niveau d'un bord relevé semblable à celui des plaques standards 15'. Ladite première plaque 15 pourra en outre être configurée pour permettre un pré assemblage desdites première et deuxième plaques 15, 19 et/ou de ladite plaque intermédiaire 23, par exemple, comme représenté sur les figures 3 et 4, par des pattes périphériques 37 de la première plaque 15 rabattables sur le bord de la deuxième plaque 19.

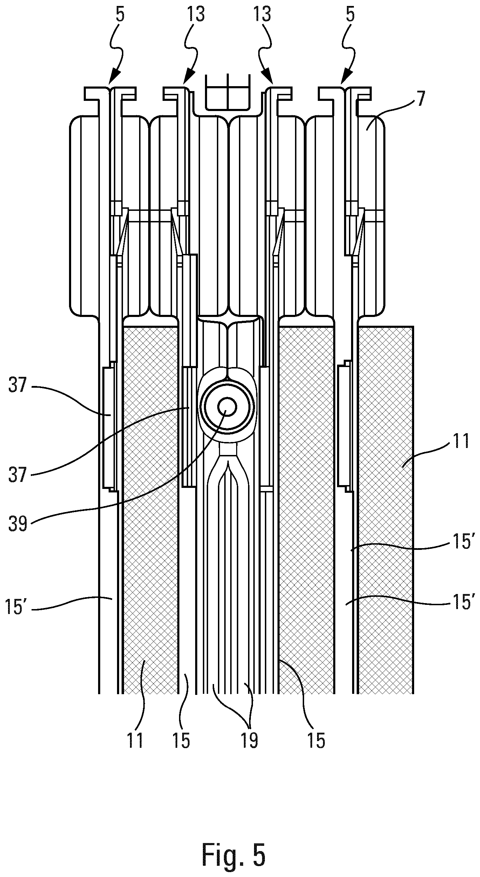

Ledit tube 13 à réservoir de matériau à changement de phases pourra être configuré pour être assemblé à un deuxième tube identique 13, en position en vis-à-vis, tel que visible aux figures 2 et 5. Ladite deuxième plaque 19 pourra avantageusement être configurée pour être jointe à une deuxième plaque 19 dudit deuxième tube 13, en position en vis-à-vis, dans laquelle les alvéoles 31 de chacune desdites deuxièmes plaques sont jointes l'une à l'autre par leur sommet 33. Ainsi, le ratio entre l'échange thermique et la perte de charge du flux d'air A en contact avec les alvéoles 31 est optimisé.

Ledit tube 13 à réservoir de matériau à changement de phases est en outre ici configuré pour que, lorsqu'il est assemblé audit deuxième tube 13, dans ladite position en vis-à-vis, ledit assemblage de tubes soit échangeable avec un assemblage d'un dit tube standard 5 et d'un intercalaire standard 11 dudit faisceau, à savoir un intercalaire 11 compris entre deux tubes standards 5 dudit faisceau. Il est ainsi facile de configurer l'échangeur en remplaçant des éléments standards, sans avoir à changer le pas de tubes.

Il est à noter que le remplissage en matériau M à changement de phases, de préférence sous forme liquide aux conditions de température appropriées pourra être réalisé à l'aide d'un orifice propre à chaque tube à réservoir de matériau à changement de phases, avantageusement à l'aide d'une tubulure commune 39 à un assemblage de tubes en position tête bêche comme on le voit à la figure 5.

L'invention concerne également le faisceau 3 d'échange de chaleur pour ledit échangeur de chaleur 1, notamment un évaporateur d'un circuit de climatisation d'un véhicule automobile. Un tel faisceau 3 comprend au moins un tube 13 à réservoir de matériau à changement de phases, tel que décrit ci-dessus, avantageusement une pluralité desdits tubes 13 à réservoir de matériau à changement de phases, le nombre de ceux-ci étant adapté au besoin de production de froid dans ledit habitacle du véhicule.

Ledit faisceau 3 comprend avantageusement au moins un dit assemblage de tubes 13 à réservoir de matériau à changement de phases, en position en vis-à-vis, en particulier une pluralité de dits assemblages de tubes 13 à réservoir de matériau à changement de phases, en position en vis-à-vis répartis sur la longueur du faisceau 3. Les paires de tubes 13 à réservoir de matériau à changement de phases pourront être disposées l'une à côté de l'autre et/ou distribuées entre des assemblages d'un dit tube standard 5 et d'un dit intercalaire standard 11 du faisceau.

L'invention concerne également l'échangeur de chaleur 1, notamment un évaporateur d'un circuit de climatisation d'un véhicule automobile, comprenant au moins un faisceau 3 d'échange de chaleur tel que décrit ci-dessus.

L'invention concerne aussi un procédé d'assemblage d'un tel échangeur de chaleur 1.

Le procédé comprend les étapes consistant à réaliser au moins un pré assemblage de deux tubes 13 à réservoir de matériau à changement de phases, en position en vis-à-vis, et disposer ledit pré assemblage entre deux tubes standards 5 dudit faisceau, comme représenté à la figure 5, pour permettre un pré assemblage de l'échangeur avant son assemblage. Ce dernier est réalisé, par exemple, par passage dans un four de brasage.

L'invention apporte ainsi un tube à réservoir de matériau à changement de phases pour un faisceau d'échange de chaleur d'un échangeur de chaleur, notamment un évaporateur d'un circuit de climatisation d'un habitacle d'un véhicule, qui est fiable et robuste, apporte une grande efficacité de transfert thermique entre le tube et le fluide frigorigène et entre le tube et le flux d'air en contact et qui facilite la mise en configuration de l'échangeur de chaleur pour correspondre au besoin de refroidissement de l'habitacle.

## Revendications

1. Tube (13) à réservoir de matériau M à changement de phases pour un faisceau (3) d'échange de chaleur d'un échangeur de chaleur (1), notamment un évaporateur d'un circuit de climatisation d'un habitacle d'un véhicule, ledit tube (13) comprenant une première plaque (15) configurée pour former une première face externe (17) du tube, une deuxième plaque (19) configurée pour être assemblée de façon étanche à ladite première plaque (15) et former une seconde face externe (21), opposée à ladite première face externe (17), et une plaque intermédiaire (23) configurée pour être assemblée de façon étanche aux dites première et deuxième plaques (15, 19), entre ces dernières, et délimiter de part et d'autre d'elle même au moins un canal (9) pour la circulation dudit fluide frigorigène F dans ledit faisceau (3) et au moins un logement (25) pour ledit matériau M à changement de phases de telle sorte que l'ensemble du matériau M à changement de phases est réparti d'un côté de la plaque intermédiaire (23) tandis que le fluide frigorigène F est réparti de l'autre côté de la plaque intermédiaire (23), ladite deuxième plaque (19) étant pourvue d'une surface externe (29) configurée pour être en contact avec un flux d'air externe A traversant ledit faisceau (3) **caractérisé en ce que** ladite surface externe (29) est pourvue d'alvéoles (31), configurées pour augmenter la surface de transfert thermique entre le matériau M à changement de phases et ledit flux d'air A.

2. Tube (13) à réservoir de matériau à changement de phases selon la revendication 1, dans lequel lesdites alvéoles (31) comportent chacune un sommet tronconique (33).

3. Tube (13) à réservoir de matériau à changement de phases selon la revendication 1 ou 2, dans lequel lesdites alvéoles (31) sont adjacentes l'une à l'autre.

4. Tube (13) à réservoir de matériau à changement de phases selon l'une quelconque des revendications précédentes, dans lequel ladite plaque intermédiaire (23) est dans un matériau identique à celui des première et deuxième plaques (15, 19).

5. Tube (13) à réservoir de matériau à changement de phases selon l'une quelconque des revendications 1 à 3, dans lequel ladite plaque intermédiaire (23) est dans un matériau à pouvoir de transfert thermique supérieur à celui des première et deuxième plaques (15, 19).

6. Tube (13) à réservoir de matériau à changement de phases selon l'une quelconque des revendications précédentes, dans lequel ladite plaque intermédiaire (23) est pourvue d'au moins une nervure (36) de liaison apte à être assemblée avec ladite première plaque (15), prévue pour définir le ou lesdits canaux (9) pour le fluide frigorigène F.

7. Tube (13) à réservoir de matériau à changement de phases selon l'une quelconque des revendications précédentes, dans lequel ladite première plaque (15) est configurée pour recevoir un intercalaire (11) de transfert thermique avec ledit flux d'air A, sur la première face externe (17) du tube.

8. Tube (13) à réservoir de matériau à changement de phases selon l'une quelconque des revendications précédentes, dans lequel ladite première et/ou ladite seconde plaque (15, 19) sont configurées pour permettre un pré assemblage desdites première et deuxième plaques (15, 19) et/ou de ladite plaque intermédiaire (23), par des pattes périphériques (37) de la première plaque (15) rabattables sur le bord de la deuxième plaque (19).

9. Tube (13) à réservoir de matériau à changement de phases selon l'une quelconque des revendications précédentes, configuré pour être assemblé à un deuxième tube identique (13).

10. Tube (13) à réservoir de matériau à changement de phases selon la revendication précédente, configuré pour que, lorsqu'il est assemblé audit deuxième tube (13), en position en vis-à-vis, ledit assemblage de tubes (13) soit échangeable avec un assemblage d'un tube standard (5) et d'un intercalaire standard (11) dudit faisceau.

11. Faisceau d'échange de chaleur (3) pour un échangeur de chaleur (1), notamment un évaporateur d'un circuit de climatisation d'un véhicule automobile, comprenant au moins un tube (13) à réservoir de matériau à changement de phases selon l'une quelconque des revendications précédentes.

12. Echangeur de chaleur (1), notamment évaporateur d'un circuit de climatisation d'un véhicule automobile, comprenant au moins un faisceau d'échange de chaleur (3) selon la revendication précédente.

13. Procédé d'assemblage d'un échangeur de chaleur (1) selon la revendication précédente, comprenant les étapes consistant à réaliser au moins un pré assemblage de deux tubes (13) à réservoir de matériau à changement de phases, en position en vis-à-vis, et disposer ledit pré assemblage entre deux tubes standards (5) dudit faisceau pour permettre un pré assemblage de l'échangeur avant son assemblage.

## Patentansprüche

1. Rohr (13) mit einem Behälter für Phasenwechselmaterial M für ein Wärmetauscherbündel (3) eines Wärmetauschers (1), insbesondere einen Verdampfer eines Klimakreislaufs eines Innenraums eines Fahrzeugs, wobei das Rohr (13) eine erste Platte (15) umfasst, die dazu ausgebildet ist, eine erste Außenseite (17) des Rohres zu bilden, eine zweite Platte (19), die dazu ausgebildet ist, mit der ersten Platte (15) dicht verbunden zu werden und eine der ersten Außenseite (17) gegenüberliegende zweite Außenseite (21) zu bilden, und eine Zwischenplatte (23), die dazu ausgebildet ist, mit der ersten und der zweiten Platte (15, 19) dicht verbunden zu werden, zwischen diesen Letzteren, und auf ihren beiden Seiten mindestens einen Kanal (9) für die Zirkulation des Kältemittels F in dem Bündel (3) und mindestens einen Aufnahmeraum (25) für das Phasenwechselmaterial M zu begrenzen, derart, dass das gesamte Phasenwechselmaterial M auf einer Seite der Zwischenplatte (23) verteilt ist, während das Kältemittel F auf der anderen Seite der Zwischenplatte (23) verteilt ist, wobei die zweite Platte (19) mit einer Außenfläche (29) versehen ist, die dazu ausgebildet ist, sich mit einem Außenluftstrom A in Kontakt zu befinden, der das Bündel (3) durchquert, **dadurch gekennzeichnet, dass** die Außenfläche (29) mit Zellen (31) versehen ist, die dazu ausgebildet sind, die Wärmeübergangsfläche zwischen dem Phasenwechselmaterial M und dem Luftstrom A zu vergrößern.

2. Rohr (13) mit einem Behälter für Phasenwechselmaterial nach Anspruch 1, wobei die Zellen (31) jeweils einen kegelstumpfförmigen Scheitel (33) aufweisen.

3. Rohr (13) mit einem Behälter für Phasenwechselmaterial nach Anspruch 1 oder 2, wobei die Zellen (31) einander benachbart sind.

4. Rohr (13) mit einem Behälter für Phasenwechselmaterial nach einem der vorhergehenden Ansprüche, wobei die Zwischenplatte (23) aus einem Material besteht, das mit demjenigen der ersten und der zweiten Platte (15, 19) identisch ist.

5. Rohr (13) mit einem Behälter für Phasenwechselmaterial nach einem der Ansprüche 1 bis 3, wobei die Zwischenplatte (23) aus einem Material mit einem Wärmeübertragungsvermögen besteht, das größer als dasjenige der ersten und der zweiten Platte (15, 19) ist.

6. Rohr (13) mit einem Behälter für Phasenwechselmaterial nach einem der vorhergehenden Ansprüche, wobei die Zwischenplatte (23) mit mindestens einer Verbindungsrippe (36) versehen ist, die geeignet ist, mit der ersten Platte (15) verbunden zu werden, und dafür vorgesehen ist, den oder die Kanäle (9) für das Kältemittel F zu definieren.

7. Rohr (13) mit einem Behälter für Phasenwechselmaterial nach einem der vorhergehenden Ansprüche, wobei die erste Platte (15) dazu ausgebildet ist, eine Einlage (11) für die Wärmeübertragung mit dem Luftstrom A auf der ersten Außenseite (17) des Rohres aufzunehmen.

8. Rohr (13) mit einem Behälter für Phasenwechselmaterial nach einem der vorhergehenden Ansprüche, wobei die erste und/oder die zweite Platte (15, 19) dazu ausgebildet sind, eine Vormontage der ersten und der zweiten Platte (15, 19) und/oder der Zwischenplatte (23) durch Umfangslaschen (37) der ersten Platte (15), die auf den Rand der zweiten Platte (19) umbiegbar sind, zu ermöglichen.

9. Rohr (13) mit einem Behälter für Phasenwechselmaterial nach einem der vorhergehenden Ansprüche, welches dazu ausgebildet ist, mit einem identischen zweiten Rohr (13) verbunden zu werden.

10. Rohr (13) mit einem Behälter für Phasenwechselmaterial nach dem vorhergehenden Anspruch, welches so ausgebildet ist, dass, wenn es mit dem zweiten Rohr (13) in einer gegenüberliegenden Position verbunden ist, der Verbund von Rohren (13) mit einem Verbund eines Standardrohres (5) und einer Standardeinlage (11) des Bündels austauschbar ist.

11. Wärmetauscherbündel (3) für einen Wärmetauscher (1), insbesondere einen Verdampfer eines Klimakreislaufs eines Kraftfahrzeugs, welches mindestens ein Rohr (13) mit einem Behälter für Phasenwechselmaterial nach einem der vorhergehenden Ansprüche umfasst.

12. Wärmetauscher (1), insbesondere Verdampfer eines Klimakreislaufs eines Kraftfahrzeugs, welcher mindestens ein Wärmetauscherbündel (3) nach dem vorhergehenden Anspruch umfasst.

13. Verfahren zur Montage eines Wärmetauschers (1) nach dem vorhergehenden Anspruch, welches die Schritte umfasst, dass mindestens eine Vormontage von zwei Rohren (13) mit einem Behälter für Phasenwechselmaterial in einer gegenüberliegenden Position durchgeführt wird und die Vormontageeinheit zwischen zwei Standardrohren (5) des Bündels angeordnet wird, um eine Vormontage des Wärmetauschers vor seiner Montage zu ermöglichen.

## Claims

1. Tube (13) with a reservoir of phase change material M for a heat exchange bundle (3) of a heat exchanger (1), in particular an evaporator of an air conditioning circuit of an interior of a vehicle, said tube (13) comprising a first plate (15) configured to form a first external face (17) of the tube, a second plate (19) configured to be joined in a sealed manner to said first plate (15) and form a second external face (21), opposite said first external face (17), and an intermediate plate (23) configured to be joined in a sealed manner to said first and second plates (15, 19), between the latter, and delimit on either side thereof at least one channel (9) for the circulation of said refrigerant fluid F in said bundle (3) and at least one housing (25) for said phase change material M such that all of the phase change material M is distributed on one side of the intermediate plate (23) while the refrigerant fluid F is distributed on the other side of the intermediate plate (23), said second plate (19) being provided with an external surface (29) configured to be in contact with an external air stream A passing through said bundle (3) **characterized in that** said external surface (29) is provided with cells (31), which are configured to increase the surface area for heat transfer between the phase change material M and said air stream A.

2. Tube (13) with a reservoir of phase change material according to Claim 1, wherein said cells (31) each have a frustoconical apex (33).

3. Tube (13) with a reservoir of phase change material according to Claim 1 or 2, wherein said cells (31) are adjacent to one another.

4. Tube (13) with a reservoir of phase change material according to any one of the preceding claims, wherein said intermediate plate (23) is made of a material identical to that of the first and second plates (15, 19) .

5. Tube (13) with a reservoir of phase change material according to any one of Claims 1 to 3, wherein said intermediate plate (23) is made of a material with a greater heat transfer power than that of the first and second plates (15, 19).

6. Tube (13) with a reservoir of phase change material according to any one of the preceding claims, wherein said intermediate plate (23) is provided with at least one connecting rib (36) able to be joined to said first plate (15), which is designed to define said one or more channels (9) for the refrigerant fluid F.

7. Tube (13) with a reservoir of phase change material according to any one of the preceding claims, wherein said first plate (15) is configured to receive a fin (11) for heat transfer with said air stream A, on the first external face (17) of the tube.

8. Tube (13) with a reservoir of phase change material according to any one of the preceding claims, wherein said first and/or said second plate (15, 19) are configured to allow pre-assembly of said first and second plates (15, 19) and/or of said intermediate plate (23), by peripheral tabs (37) of the first plate (15) that can be folded over the edge of the second plate (19).

9. Tube (13) with a reservoir of phase change material according to any one of the preceding claims, configured to be joined to a second, identical tube (13).

10. Tube (13) with a reservoir of phase change material according to the preceding claim, configured such that, when it is joined to said second tube (13), in a facing position, said assembly of tubes (13) can be exchanged with an assembly of a standard tube (5) and a standard fin (11) of said bundle.

11. Heat exchange bundle (3) for a heat exchanger (1), in particular an evaporator of an air conditioning circuit of a motor vehicle, comprising at least one tube (13) with a reservoir of phase change material according to any one of the preceding claims.

12. Heat exchanger (1), in particular an evaporator of an air conditioning circuit of a motor vehicle, comprising at least one heat exchange bundle (3) according to the preceding claim.

13. Method for assembling a heat exchanger (1) according to the preceding claim, comprising the steps consisting in realizing at least one pre-assembly of two tubes (13) with a reservoir of phase change material, in a facing position, and disposing said pre-assembly between two standard tubes (5) of said bundle so as to allow the exchanger to be pre-assembled before it is assembled.
